# EUROPÄISCHE PATENTANMELDUNG

(11) **EP 3 217 027 A1**
(43) Veröffentlichungstag der Anmeldung: **13.09.2017**
(21) Anmeldenummer: 16159174.8
(22) Anmeldetag: 08.03.2016
(51) Int. Cl.: F16B 13/00, F16B 13/06

(54) **BREITES EINLAGEELEMENT ZUM EINFASSEN EINER ANKERSTANGE**

(71) Anmelder: HILTI Aktiengesellschaft, 9494 Schaan (LI)
(72) Erfinder: Nguyen, Huu Toan, 9453 Eichberg (CH); Hakenholt, Christoph, 6800 Feldkirch (AT)
(74) Vertreter: Hilti Aktiengesellschaft Corporate Intellectual Property

(57) **Zusammenfassung**

Die Erfindung betrifft ein Ankerset aufweisend einen Anker mit einer Ankerstange sowie ein Einlageelement zum zumindest teilweisen Einsenken in ein die Ankerstange umgebendes mineralisches Substrat zum Armieren einer Mündung eines im mineralischen Substrat angeordneten Lochs, wobei das Einlageelement eine Vorderseite, eine Rückseite und eine Durchgangsöffnung für die Ankerstange aufweist. Erfindungsgemäss ist vorgesehen, dass der maximale Aussendurchmesser des Einlageelements grösser ist als seine Höhe. Die Erfindung betrifft ferner ein Einlageelement für ein solches Ankerset, eine Befestigungsanordnung enthaltend ein solches Ankerset und ein Setzverfahren für ein solches Ankerset.

## Beschreibung

Die Erfindung betrifft ein Ankerset gemäss dem Oberbegriff des Anspruchs 1. Ein solches Ankerset weist einen Anker mit einer Ankerstange sowie ein Einlageelement zum zumindest teilweisen Einsenken in ein die Ankerstange umgebendes mineralisches Substrat zum Armieren einer Mündung eines im mineralischen Substrat angeordneten Lochs auf, wobei das Einlageelement eine Vorderseite, eine Rückseite und eine Durchgangsöffnung für die Ankerstange aufweist. Die Erfindung betrifft ferner ein Einlageelement für ein solches Ankerset gemäss Anspruch 10, eine Befestigungsanordnung enthaltend ein solches Ankerset gemäss Anspruch 11 und ein Setzverfahren für ein solches Ankerset gemäss Anspruch 12.

Die DE 102009006207 A1 beschreibt eine Befestigungsanordnung, bei der eine Querkrafthülse, welche die Ankerstange umgibt, im Bereich der Bohrlochmündung angeordnet wird, wobei die Querkrafthülse eine verbesserte Querkrafttragfähigkeit bewirken soll. Gemäss DE 102009006207 A1 kann vorgesehen sein, dass die Querkrafthülse das Bohrloch im Bereich der Bohrlochmündung aufweitet. Insbesondere kann die Querkrafthülse zu diesem Zweck stirnseitige Schneiden aufweisen.

Die DE 20201927 U1 beschreibt einen Verbundanker, der eine Querkrafthülse aufweist, welche die Ankerstange gegen Querbelastungen im Bereich der Mündung des Lochs abstützt.

Die DE 10204591 A1 lehrt ein Verfahren zum Setzen eines Spreizankers, bei dem nach der Verankerung des Spreizankers im Loch zusätzlich Mörtel in das Loch gefüllt wird. Der ausgehärtete Mörtel soll den Spreizanker in radialer Richtung im Loch abstützen. Ein weiteres Verfahren zum Setzen eines Spreizankers, bei dem zusätzlich eine aushärtbare Masse in das Bohrloch eingebracht wird, geht aus der Europäischen Patentanmeldung mit der Anmeldenummer 15191165.8 hervor.

Aus der WO 11116918 A2 geht eine Injektions-Unterlegscheibe, die ein Mittelloch, eine Befüllöffnung und eine Entlüftungsöffnung aufweist, hervor. Diese Injektions-Unterlegscheibe kommt bei einem Verfahren zur nachträglichen Ertüchtigung eines in ein Loch eingesetzten Schwerlastankers mit einer Spreizhülse zum Einsatz. Eine weitere Unterlegscheibe mit einer Durchgangsbohrung zum Einfüllen der Mörtelmasse in das Loch ist aus der DE 10111470 A1 bekannt.

Aus der DE 19749571 A1 geht eine Ankervorrichtung zur Befestigung von dynamisch querbelasteten Gegenständen an einem Befestigungsgrund hervor. Diese Ankervorrichtung weist eine die Ankerstange umschliessende Bundbuchse auf, die nach dem Setzen der Ankervorrichtung in einen der Lochmündung benachbarten, im Durchmesser vergrösserten Bereich des Lochs hineinragt, wobei ein mit Verbundmörtel füllbarer, die Bundbuchse umschliessender Ringraum vorgesehen ist.

Aus der US 2009180831 A1 sind Ausgleichselemente mit von einer Kreisform abweichendem Querschnitt bekannt, die einen .Toleranzausgleich an einem Anbauteil ermöglichen.

Aufgabe der Erfindung ist es, bei einem Anker, welcher in einem mineralischen Substrat verankert wird, bei geringem Aufwand, guter Setzbarkeit und hoher Zuverlässigkeit besonders gute Lastwerte, insbesondere bei Querbelastung des Ankers, zu erzielen.

Die Aufgabe wird durch ein Ankerset gemäss Anspruch 1, ein Einlageelement für ein solches Ankerset gemäss Anspruch 10, eine Befestigungsanordnung enthaltend ein solches Ankerset gemäss Anspruch 11 und ein Setzverfahren für ein solches Ankerset gemäss Anspruch 12 gelöst. Bevorzugte Ausführungsformen sind in den abhängigen Ansprüchen angegeben.

Ein erfindungsgemässes Ankerset ist dadurch gekennzeichnet, dass der maximale Aussendurchmesser des Einlageelements grösser ist als die Höhe des Einlageelements.

Die Erfindung basiert auf der Erkenntnis, dass das mineralische Substrat bei Querbelastung das schwächste Glied des Ankersystems sein kann. Beispielsweise kann es bei, insbesondere wiederholter, Querbelastung aufgrund der Wirkung der Ankerstange gegen das Substrat im Bereich der Mündung des Lochs zu einer Beschädigung des Substrats kommen, was die Tragfähigkeit des gesamten Ankersystems beeinträchtigen kann. Hier setzt die Erfindung an und sieht vor, das mineralische Substrat als das schwächste Glied im Bereich der Mündung des Lochs gezielt zu stärken, vorzugsweise so weit, dass primär nicht das Substrat versagt, sondern die Ankerstange im sogenannten Stahlbruch.

Um das Substrat um den Anker herum im Bereich der Mündung des Lochs zu stärken wird ein Einlageelement, insbesondere aus einem Metallmaterial, vorgesehen. Dieses Einlageelement hat die Aufgabe, die Mündung des Lochs so zu armieren, dass das Einlageelement die auftretenden Querlasten aufnehmen und vergleichsweise homogen und auf vergleichsweise grosser Fläche auf das Substrat übertragen kann. Spannungsspitzen, die über der Festigkeit des mineralischen Substrats liegen, können somit wirksam vermieden werden und es können entsprechend höhere Kräfte übertragen werden, bevor das Substrat versagt.

Die Erfindung hat weiterhin erkannt, dass zwar einerseits die Leistungsfähigkeit eines solchen Einlageelements wesentlich von der Kontaktfläche zwischen Substrat und Einlageelement abhängen kann, da der sich am Übergang zwischen Einlageelement und Substrat einstellende Druck vom Quotienten von Querkraft und Kontaktfläche abhängt, dass aber andererseits diese Kontaktfläche häufig nicht beliebig durch Vergrösserung der Höhe des Einlageelements, das heisst durch Vergrösserung der Einbindetiefe des Einlageelements im Substrat, vergrössert werden kann. Denn bei grossen Einbindetiefen steigt unter anderem das Risiko, Bewehrungseisen mit dem Einlageelement zu treffen. Darüber hinaus kann bei grossen Einbindetiefen der Setzvorgang des Einlageelements vergleichsweise aufwändig sein und/oder es können besonders hohe Anforderungen an die Materialqualität des Einlageelements gegeben sein. Auf diesen Erkenntnissen aufbauend schlägt die Erfindung vor, den maximalen Aussendurchmesser des Einlageelements, der insbesondere in einem der Spitze des Einlageelements entgegengesetzten rückwärtigen Bereich des Einlageelements gegeben sein kann, grösser als die Höhe des Einlageelements zu wählen. Hierdurch kann aufgrund der zuvor erläuterten Zusammenhänge einerseits ein besonders gutes Lastverhalten und andererseits ein besonders gutes Setzverhalten erhalten werden.

In fachüblicher Weise kann die Höhe des Einlageelements insbesondere parallel zur Längsachse des Einlageelements gemessen werden und der Aussendurchmesser des Einlageelements kann senkrecht zur Höhe und/oder senkrecht zur Längsachse des Einlageelements, das heisst in einer Querschnittsebene des Einlageelements, gemessen werden. Die Längsachse des Einlageelements kann insbesondere von dessen Durchgangsöffnung definiert werden. Unter dem maximalen Aussendurchmesser kann insbesondere das Durchmessermaximum im Höhenverlauf des Einlageelements verstanden werden, also das Durchmessermaximum bei Messungen in unterschiedlichen Querschnittsebenen, welche in Längsrichtung voneinander beabstandet sind.

Das Einlageelement ist vorzugsweise zumindest annähernd ein Rotationskörper, was insbesondere dann vorteilhaft ist, wenn sich das Einlageelement selbst in das Substrat einschneidet. Grundsätzlich könnte aber auch eine unrunde Form des Einlageelements vorgesehen sein, wobei bei einer unrunden Form unter dem Aussendurchmesser des Einlageelements die maximale Abmessung des Einlageelements in der jeweiligen Querschnittsebene verstanden werden kann.

Die Vorderseite kann insbesondere diejenige Seite sein, welche beim Einsenken des Einlageelements in das mineralische Substrat vorauseilt, das heisst diejenige Seite, welche beim Einsenken des Einlageelements zuerst in das mineralische Substrat gelangt. Die Rückseite kann insbesondere der Rückseite entgegengesetzt am Einlageelement angeordnet sein. Vorzugsweise kann das Einlageelement an der Vorderseite und an der Rückseite jeweils eine Stirnseite aufweisen, wobei diese Stirnseiten in besonders bevorzugter Weise parallel zueinander verlaufen können. Die Vorderseite kann insbesondere eine Spitze des Einlageelements bilden. Insbesondere kann die Durchgangsöffnung des Einlageelements die Vorderseite und/oder vordere Stirnseite des Einlageelements mit der Rückseite und/oder rückwärtigen Stirnseite des Einlageelements verbinden.

Das mineralische Substrat besteht aus einem mineralischen Baustoff, vorzugsweise aus Beton. Vorzugsweise kann es sich bei dem mineralischen Substrat also um ein Betonsubstrat handeln, da das Lastverhalten bei Querlasten, welches erfindungsgemäss verbessert wird, insbesondere im Zusammenhang mit Betonsubstraten wesentlich sein kann.

Das erfindungsgemässe Einlageelement dient zum Armieren der Mündung des im mineralischen Substrat angeordneten Lochs. Der Umstand, dass die Mündung mit dem Einlageelement armiert ist, kann insbesondere beinhalten, dass das Substrat im Bereich der Mündung im Inneren des Lochs vom Einlageelement bedeckt ist, so dass eine im Bereich der Mündung aufgrund von Querkraftwirkung radial versetzte Ankerstange nicht unmittelbar am mineralischen Substrat anschlägt, sondern lediglich mittelbar auf das mineralische Substrat wirkt, nämlich über das Einlageelement hinweg. Mit anderen Worten wird bei armierter Mündung die Wand des Lochs im Bereich der Mündung nicht durch das mineralische Substrat, sondern durch das Einlageelement gebildet, insbesondere durch die Wand der Durchgangsöffnung im Einlageelement. Das erfindungsgemässe Einlageelement kann im gesetzten Zustand, das heisst in einer erfindungsgemässen Befestigungsanordnung, ein Querkraftaufnahmeelement bilden, welches Querkräfte der Ankerstange aufnehmen und an das mineralische Substrat übertragen kann. Unter der Mündung kann in fachüblicher Weise insbesondere der aussenseitige Endbereich des Lochs verstanden werden. Die Armierung der Mündung des Lochs kann insbesondere lochinnenseitig gegeben sein.

Insbesondere kann das Einlageelement einen Ring bilden, welcher die Durchgangsöffnung für die Ankerstange und somit die gegebenenfalls in der Durchgangsöffnung angeordnete Ankerstange umgibt, und zwar insbesondere einen geschlossenen Ring, was einen besonders gleichmässigen Kraftfluss bewirken kann. In der Durchgangsöffnung können auch Positionierungsmittel zum Positionieren des Einlageelements relativ zur Ankerstange, beispielsweise radial in die Durchgangsöffnung reichende Vorsprünge, und/oder zumindest eine von der Ankerstange durchstossbare Membran angeordnet sein. Die Durchgangsöffnung im Einlageelement ist insbesondere durchmessergrösser als die Ankerstange, so dass die Durchgangsöffnung die Ankerstange aufnehmen kann, dies vorzugsweise jedoch lediglich geringfügig.

Der Anker weist zweckmässigerweise zumindest einen Verankerungsbereich auf, welcher zum Verankern der Ankerstange an einer Wand des im mineralischen Substrat vorgesehenen Lochs dient. Der Anker kann vorzugsweise ein mechanischer Anker sein, das heisst ein Anker, bei dem die Verankerung auf mechanischem Wege erfolgt. Er kann beispielsweise ein Spreizanker sein. Ein solcher Spreizanker weist vorzugsweise im Verankerungsbereich zumindest einen Spreizkörper, vorzugsweise eine Spreizhülse, auf, welcher von einer im Verankerungsbereich an der Ankerstange angeordneten Schrägfläche, insbesondere einem Spreizkonus, radial nach aussen gedrängt wird, wenn die Ankerstange axial relativ zum Spreizkörper versetzt wird.

Erfindungsgemäss soll das Einlageelement im mineralischen Substrat eingesenkt werden, was insbesondere beinhalten kann, dass das Einlageelement in einer Vertiefung des Substrats angeordnet wird, wobei die Vertiefung insbesondere eine mündungsseitige Aufweitung des Lochs sein kann, welches zur Aufnahme der Ankerstange im mineralischen Substrat vorgesehen ist.

Die Erfindung hat weiterhin erkannt, dass nicht nur die Kontaktfläche, sondern auch die Form des Einlageelements massgebend für die Funktion des Einlageelements sein kann. Besonders bevorzugt ist es, dass das Einlageelement einen Verjüngungsbereich aufweist, in dem der Aussendurchmesser des Einlageelements zur Vorderseite des Einlageelements hin abnimmt. Demgemäss nimmt der Aussendurchmesser des Einlageelements zur Spitze des Einlageelements hin ab und/oder zur Rückseite des Einlageelements hin zu. Gemäss dieser Ausführungsform kann eine besonders hohe Einbindetiefe und eine besonders zuverlässige Führung der Ankerstange im Einlageelement bei besonders guter Setzbarkeit erhalten werden. Der Verjüngungsbereich kann sich insbesondere an die Vorderseite anschliessen. Besonders bevorzugt ist es, dass der Aussendurchmesser des Einlageelements und/oder die Querschnittsfläche des Einlageelements unmittelbar im Anschluss an die Vorderseite des Einlageelements ein, vorzugsweise globales, Minimum aufweist, was vorzugsweise heisst dass das Einlageelement an seiner Vorderseite am schmälsten ist. Zweckmässigerweise kann der Aussendurchmesser des Einlageelements im Verjüngungsbereich um mindestens 10% oder um mindestens 20% abnehmen, das heisst der Aussendurchmesser ist am vorderen Ende des Verjüngungsbereichs um mindestens 10% beziehungsweise 20% kleiner als am rückwärtigen Ende des Verjüngungsbereichs, wobei dieses rückwärtige Ende des Verjüngungsbereich insbesondere an den rückwärtigen Bereich des Einlageelements anschliessen kann. Damit der Verjüngungsbereich besonders gut wirken kann, weist er vorzugsweise eine Höhe auf, die mindestens 20%, vorzugsweise mindestens 30% der Höhe h des gesamten Einlageelements beträgt.

Insbesondere kann vorgesehen sein, dass das Einlageelement im Verjüngungsbereich eine im Längsschnitt des Einlageelements konkave Aussenoberfläche aufweist. Vorzugsweise weist das Einlageelement im Verjüngungsbereich einen konkaven Kegelmantel auf, ist dort also konkavkegelig, und/oder nimmt im Verjüngungsbereich die Neigung der Aussenoberfläche des Einlageelements zur Längsachse des Einlageelements mit zunehmendem Abstand von der Vorderseite des Einlageelements zu. Insbesondere kann das Einlageelement zumindest bereichsweise, vorzugsweise im Verjüngungsbereich, im Längsschnitt des Einlageelements eine B-Spline-Form aufweisen. Die besagten konkaven beziehungsweise B-Spline-artigen Formen können zum einen in besonders einfacher und zuverlässiger Weise dafür sorgen, dass abgearbeitetes mineralisches Substrat, welches bei einem spanenden Setzvorgang des Einlageelements anfällt, von der Spitze des Einlageelements nach aussen abgeführt wird. Darüber hinaus hat sich gezeigt, dass eine konkave beziehungsweise B-Spline-artige Form eine besonders gute Lasteinleitung und Lastübertragung ermöglichen kann. In fachüblicher Weise kann unter einem Längsschnitt insbesondere ein Schnitt in einer Schnittebene verstanden werden, welche parallel zur Längsachse des Einlageelements verläuft und vorzugsweise die Längsachse umfasst.

Vorzugsweise kann das Einlageelement eine, insbesondere ebene, vordere Stirnseite aufweisen. Diese vordere Stirnseite kann den Verjüngungsbereich mit der vorderen Mündung der Durchgangsöffnung des Einlageelements verbinden. Der Verjüngungsbereich kann aber auch bis zur Durchgangsöffnung hin reichen.

Die beschriebenen Formen des Einlageelements, insbesondere der Verjüngungsbereich, dessen konkave Aussenoberfläche und/oder die B-Spline-Form, können als unabhängige eigenständige Erfindungsaspekte betrachtet werden, die auch bei solchen Einlageelementen realisiert werden können, deren maximaler Aussendurchmesser nicht grösser ist als deren Höhe.

Grundsätzlich kann vorgesehen sein, dass das Einlageelement beim Einsenken in eine Vertiefung eingebracht wird, die vorab mit einem separaten Senkwerkzeug erzeugt worden ist. Besonders bevorzugt ist es jedoch, dass das Einlageelement die Vertiefung, in welche das Einlageelement eingesenkt wird, das heisst vorzugsweise die mündungsseitige Aufweitung des Lochs für die Ankerstange, zumindest teilweise, vorzugsweise vollständig, selbst erzeugt. Insbesondere kann also das Einlageelement auch als Bohrer zum Bohren der Vertiefung dienen. Hierdurch kann der Setzvorgang weiter vereinfacht und beschleunigt werden. Insbesondere vor diesem Hintergrund kann es vorteilhaft sein, dass das Einlageelement zumindest eine Schneide zum Schneiden des mineralischen Substrats aufweist. Eine solche Schneide erlaubt ein besonders einfaches und zuverlässiges Erstellen der Vertiefung im mineralischen Substrat. Insbesondere kann zumindest eine Schneide im Verjüngungsbereich des Einlageelements vorgesehen sein. Vorzugsweise kann zusätzlich zumindest eine weitere Schneide an der vorderen Stirnseite des Einlageelements angeordnet sein. Die im Verjüngungsbereich des Einlageelements angeordnete Schneide kann in besonders bevorzugter Weise nicht-parallel zur Längsachse des Einlageelements verlaufen, was die Abführung von abgearbeitetem mineralischem Substrat unterstützen kann. Zweckmässigerweise können am Verjüngungsbereich und vorzugsweise auch an der vorderen Stirnseite jeweils mehrere Schneiden angeordnet sein.

Eine weitere vorteilhafte Ausgestaltung der Erfindung liegt darin, dass das Einlageelement zumindest eine Drehkupplung zur drehfesten Kopplung des Einlageelements mit einem Setzwerkzeug aufweist. Insbesondere kann die Drehkupplung zum Aufbringen eines parallel zur Längsachse des Einlageelements gerichteten Drehmoments auf das Einlageelement dienen. Mittels einer solchen Drehkupplung kann das Einlageelement in besonders einfacher und zuverlässiger Weise zum Erstellen der Vertiefung in Drehung versetzt werden. Insbesondere kann die Drehkupplung durch eine oder mehrere Ausnehmungen im Einlageelement gebildet werden, was im Hinblick auf den Materialaufwand und die Fertigung des Einlageelements vorteilhaft sein kann. Durch die eine oder mehrere Ausnehmungen im Einlageelement, welche die Drehkupplung bilden, kann ein Querschnitt, der von einer Kreisform abweicht, und somit zumindest eine Schlüsselfläche gebildet werden. Die eine oder mehrere Ausnehmungen im Einlageelement kann beziehungsweise können in die Durchgangsöffnung für die Ankerstange übergehen, müssen dies aber nicht.

Eine andere zweckmässige Weiterbildung der Erfindung liegt darin, dass das Einlageelement aussenseitig zumindest einen Abführkanal für abgearbeitetes mineralisches Substrat aufweist. Vorzugsweise kann der zumindest eine Abführkanal in einem rückwärtigen Bereich des Einlageelements vorgesehen sein, welcher sich an den Verjüngungsbereich anschliesst, und welcher aussenseitig insbesondere kreiszylindrisch sein kann. Mittels eines Abführkanals kann in besonders einfacher Weise eine besonders zuverlässige Abführung des abgearbeiteten mineralischen Substrats erreicht werden, welches beim Einbohren des Einlageelements in das mineralische Substrat anfällt. Zweckmässigerweise sind mehrere Abführkanäle für abgearbeitetes mineralisches Substrat vorgesehen.

Das Einlageelement besteht insbesondere aus einem Material, welches sich vom mineralischen Substrat unterscheidet. Besonders vorteilhaft ist es, dass das Einlageelement, zumindest überwiegend, aus einem Metallmaterial besteht. Ein solches Metallmaterial, insbesondere Stahl, kann die im Betrieb auftretenden Kräfte besonders gut übertragen ohne selbst zu versagen. Auf dem Einlageelement können auch eine oder mehrere Beschichtungen, beispielsweise eine Korrosionsschutzschicht oder/und eine reibungsbeeinflussende Schicht, vorgesehen sein. Darüber hinaus können auf dem Einlageelement auch ein oder mehrere beim Setzvorgang abreissende Körper angeordnet werden, um die Funktionalität noch weiter zu verbessern.

Die Ankerstange kann ebenfalls, zumindest überwiegend, aus einem Metallmaterial bestehen, insbesondere aus Stahl.

Das Ankerset kann, insbesondere vor seinem Setzvorgang, in einer gemeinsamen Verpackung angeordnet sein. Nach seinem Setzvorgang kann das Ankerset mit dem mineralischen Substrat verbunden sein. Insbesondere umfasst die Erfindung das Ankerset in seinem gesetzten Zustand. Demgemäss kann vorgesehen sein, dass die Ankerstange durch die Durchgangsöffnung hindurchgeführt ist.

Die Erfindung betrifft auch das Einlageelement eines erfindungsgemässen Ankersets für sich betrachtet, also ohne den zugehörigen Anker.

Die Erfindung umfasst ferner auch das Ankerset in Kombination mit dem mineralischen Substrat, in welchem der Anker verankert und das Einlageelement eingesenkt ist. Insbesondere umfasst die Erfindung somit eine Befestigungsanordnung aufweisend ein erfindungsgemässes Ankerset und ein mineralisches Substrat mit einem Loch mit einer Mündung, wobei die Ankerstange im Loch angeordnet und im Loch verankert ist, und wobei das Einlageelement zumindest teilweise im mineralischen Substrat eingesenkt ist und das Einlageelement dabei die Ankerstange ringförmig umgibt und die Mündung des Lochs armiert. Insbesondere umgibt das Einlageelement die Ankerstange derart, dass die Ankerstange bei Querbelastung auf das Einlageelement wirken kann, was vorzugsweise beinhalten kann, dass die in der Durchgangsöffnung angeordnete Ankerstange dem Einlageelement gegenüberliegt und/oder dass das Einlageelement die in der Durchgangsöffnung angeordnete Ankerstange mit allenfalls geringfügigem Spiel einfasst.

Dass das Einlageelement zumindest teilweise im mineralischen Substrat eingesenkt ist, kann vorzugsweise beinhalten, dass zumindest die Vorderseite, die vorderen Stirnseite und/oder die Spitze des Einlageelements gegenüber dem Niveau der das Einlageelement umgebenden Substratoberfläche in das Innere des Substrats zurückversetzt ist. Sofern das Einlageelement lediglich teilweise im mineralischen Substrat eingesenkt ist, kann es auch Querlasten eines am Anker angeordneten Anbauteils unmittelbar in das mineralische Substrat übertragen.

Das Einlageelement kann jedoch auch vollständig im mineralischen Substrat eingesenkt sein, was insbesondere beinhalten kann, dass auch die rückwärtige Stirnseite des Einlageelements gegenüber dem Niveau der das Einlageelement umgebenden Substratoberfläche in das Innere des Substrats zurückversetzt ist, oder dass die rückwärtige Stirnseite zumindest bündig mit dem Niveau der das Einlageelement umgebenden Substratoberfläche ist. Die damit einhergehende Entkopplung von Anbauteil und Einlageelement kann im Hinblick auf die Lasteinleitung aber auch im Hinblick auf die Einsatzvielfalt vorteilhaft sein.

Die Erfindung betrifft auch den bestimmungsgemässen Gebrauch des erfindungsgemässen Ankersets. Insbesondere betrifft die Erfindung ein Setzverfahren für ein erfindungsgemässes Ankerset, bei dem in einem mineralischen Substrat ein Loch mit einer Mündung vorgesehen wird, an der Mündung des Lochs eine Aufweitung des Lochs vorgesehen wird, die Ankerstange in das Loch eingeführt und im Loch verankert wird, und die Ankerstange in der Durchgangsöffnung des Einlageelements angeordnet wird und das Einlageelement zumindest bereichsweise in der Aufweitung des Lochs angeordnet wird und dabei die Mündung des Lochs armiert wird. Insbesondere wird das Ankerset in einen Zustand gebracht, in dem sich die Ankerstange in der Durchgangsöffnung des Einlageelements befindet und das Einlageelement zugleich zumindest teilweise im mineralischen Substrat eingesenkt ist. In diesem Zustand kann das Einlageelement zur Übertragung von Querlasten von der Ankerstange in das mineralische Substrat dienen. Im erfindungsgemässen Setzverfahren kann eine erfindungsgemässe Befestigungsanordnung erhalten werden.

An der Aufweitung des Lochs weist das Loch zweckmässigerweise einen lokal vergrösserten Durchmesser auf. Die Verankerung der Ankerstange erfolgt vorzugsweise zumindest teilweise in einem zur Aufweitung versetzten Bereich des Lochs, insbesondere in einem Fussbereich des Lochs. Das Loch im Substrat kann ein Bohrloch sein, grundsätzlich kann es aber auch in einem alternativen Verfahren hergestellt werden.

Besonders bevorzugt ist es, dass zunächst die Ankerstange im Loch angeordnet wird und anschliessend das Einlageelement in der Aufweitung des Lochs angeordnet wird. Demgemäss kann also das Einlageelement auf die Ankerstange aufgesteckt werden, nachdem die Ankerstange im Loch angeordnet wurde. Vorzugsweise kann die Ankerstange auch im Loch vorverankert werden, bevor das Einlageelement auf die Ankerstange aufgesteckt wird und/oder das Einlageelement in der Aufweitung des Lochs angeordnet wird. Gemäss dieser Ausführungsform kann die Ankerstange zur Führung des Einlageelements dienen, was den Setzvorgang noch weiter vereinfachen kann und die Zuverlässigkeit der resultierenden Befestigungsanordnung noch weiter verbessern kann.

Insbesondere kann in vorteilhafter Weise zumindest ein Teilbereich der Aufweitung des Lochs durch Eindrehen des Einlageelements in das Substrat erzeugt wird. Demgemäss wirkt das Einlageelement als Bohrwerkzeug, welches die Aufweitung während des Einsenkens selbst erstellt. Hierdurch kann das Setzverfahren weiter vereinfacht werden und ein besonders guter Kontakt zwischen Einlageelement und Substrat erhalten werden. Besonders bevorzugt ist es, dass zumindest ein Teilbereich der Aufweitung des Lochs durch Eindrehen des auf die Ankerstange aufgesteckten Einlageelements in das Substrat erzeugt wird. Gemäss dieser Ausführungsform kann die Ankerstange zur Führung des Einlageelements dienen, was die Zuverlässigkeit in besonders einfacher Weise noch weiter steigern kann.

Das erfindungsgemässe Einlageelement kann beispielsweise in einem Stanzprozess gefertigt werden, was die Kosten gering halten kann. Dabei kann ein anschliessender Härteprozess vorgesehen werden, um die gegebenenfalls vorgesehenen Schneiden besonders widerstandsfähig zu machen.

Merkmale, die im Zusammenhang mit dem erfindungsgemässen Aspekt Ankerset, Einlageelement, Befestigungsanordnung oder Setzverfahren erläutert werden, sind nicht auf diesen Aspekt beschränkt, sondern können auch bei einem oder mehreren der jeweils anderen erfindungsgemässen Aspekte Ankerset, Einlageelement, Befestigungsanordnung oder Setzverfahren zum Einsatz kommen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figuren 1
- bis 5 :: aufeinanderfolgende Stadien bei der Durchführung eines Verfahrens zum Setzen eines Ankersets, jeweils im Längsschnitt;
- Figur 6:: eine perspektivische Ansicht des Einlageelements des Ankersets, welches bei der Durchführung des Verfahrens gemäss Figuren 1 bis 5 verwendet wird;
- Figur 7:: das Einlageelement aus Figur 6 von vorne;
- Figur 8:: das Einlageelement aus Figuren 6 und 7 in Längsschnittsansicht A-A gemäss Figur 7;
- Figur 9:: das Einlageelement aus Figuren 6 bis 8 von hinten;
- Figur 10:: eine perspektivische Ansicht eines zweiten Ausführungsbeispiels eines Einlageelements für ein Ankerset;
- Figur 11:: das Einlageelement aus Figur 10 von der Seite;
- Figur 12:: das Einlageelement aus Figuren 10 und 11 von vorne; und
- Figur 13:: eine Stadienansicht entsprechend Figur 5 eines Setzverfahrens, bei dem das Einlageelement der Figuren 10 bis 12 anstelle des Einlageelements der Figuren 6 bis 9 verwendet wurde.

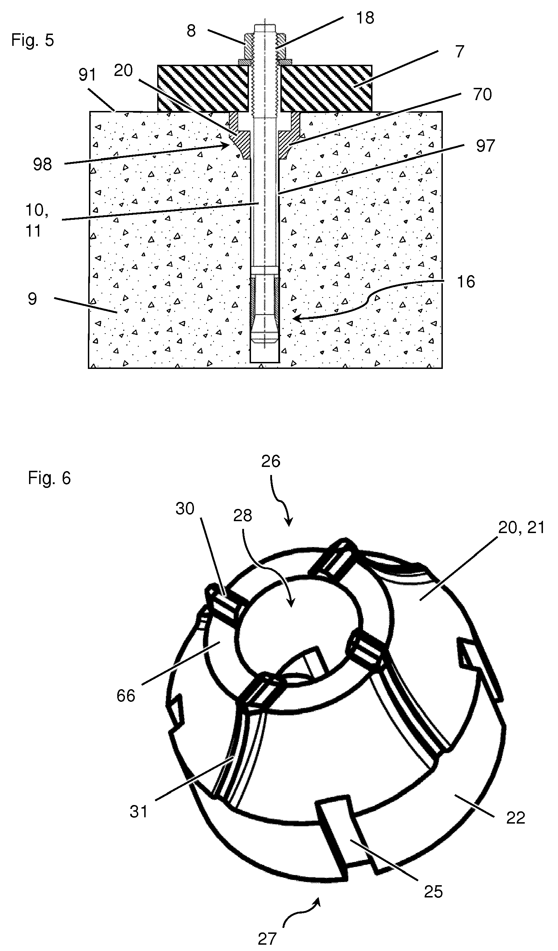

Ein erstes Ausführungsbeispiel eines erfindungsgemässen Einlageelements 20 für ein erfindungsgemässes Ankerset zur Verwendung in einem erfindungsgemässen Setzverfahren ist in den Figuren 6 bis 9 dargestellt. Das Einlageelement 20 ist im Wesentlichen rotationssymmetrisch um eine Längsachse 99 herum ausgebildet. Das Einlageelement 20 weist einen rückwärtigen Bereich 22 auf, welcher von einer Rückseite 27 des Einlageelements 20 ausgeht, und in welchem das Einlageelement 20 eine im Wesentlichen zylindrische Aussenoberfläche aufweist. An den rückwärtigen Bereich 22 schliesst sich axial nach vorne versetzt, das heisst in Richtung der Längsachse 99 nach vorne versetzt, ein Verjüngungsbereich 21 an, in welchem der Aussenquerschnitt und der Aussendurchmesser des Einlageelements 20 zu einer Vorderseite 26 des Einlageelements 20 hin abnehmen. Aufgrund dieser Konfiguration weist das Einlageelement 20 im Anschluss an seine Rückseite 27 einen grösseren Aussendurchmesser auf als im Anschluss an seine Vorderseite 26, und der maximale Aussendurchmesser dₘₐₓ ist im rückwärtigen Bereich 22, insbesondere im Anschluss an die Rückseite 27 gegeben.

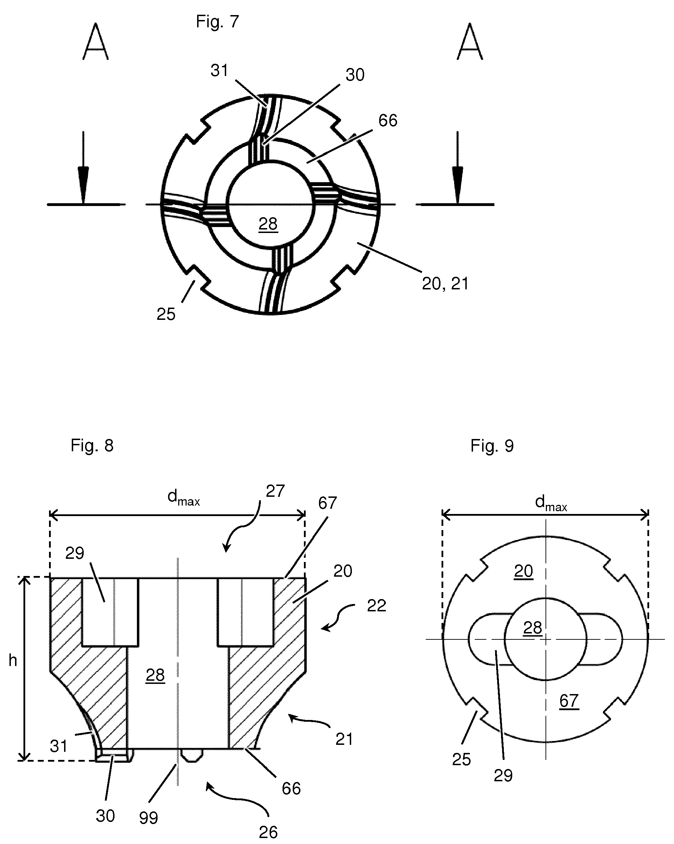

Wie insbesondere Figur 8 zeigt, ist das Einlageelement 20 dabei so bemessen, dass der maximale Aussendurchmesser dₘₐₓ des Einlageelements 20 grösser ist als die Höhe h des Einlageelements 20, wobei die Höhe h insbesondere in Richtung der Längsachse 99 des Einlageelements 20 gemessen wird. Wie insbesondere Figur 8 weiter zeigt, ist das Einlageelement 20 in seinem Verjüngungsbereich 21 aussenseitig konkav ausgebildet und weist dort im Schnitt vorzugsweise eine B-Spline-Form auf.

Das Einlageelement 20 weist eine Durchgangsöffnung 28 für die Ankerstange 11 eines weiter unten im Detail beschriebenen Ankers 10 auf. Die Durchgangsöffnung 28 für die Ankerstange 11 erstreckt sich dabei durch den rückwärtigen Bereich 22 und den Verjüngungsbereich 21 hindurch und verbindet die Vorderseite 26 des Einlageelements 20 mit dessen Rückseite 27. Die Längsachse 99 verläuft, insbesondere koaxial, durch die Durchgangsöffnung 28 hindurch.

An seiner Vorderseite 26 weist das Einlageelement 20 eine vordere Stirnseite 66 auf. Diese ist im Wesentlichen eben ausgebildet und bildet somit einen Kreisring. An seiner Rückseite 27 weist das Einlageelement 20 eine rückwärtige Stirnseite 67 auf, die ebenfalls im Wesentlichen eben ausgebildet ist.

Das Einlageelement 20 weist ferner Schneiden 30 und 31 zum Abarbeiten von anstehendem mineralischem Substrat auf. Dabei sind beispielhaft vier Schneiden 31 aussenseitig im Verjüngungsbereich 21 und beispielhaft vier weitere Schneiden 30 an der vorderen Stirnseite 66 vorgesehen. Insbesondere können sich die Schneiden 30 der vorderen Stirnseite 66 an die Schneiden 31 des Verjüngungsbereichs 21 anschliessen. Die Schneiden 31 des Verjüngungsbereichs 21 sind nicht-parallel und leicht geneigt bezogen auf die Längsachse 99 des Einlageelements 20 ausgebildet.

An seiner Rückseite 27 weist das Einlageelement 20 eine Drehkupplung 29 zum drehfesten Koppeln des Einlageelements 20 mit einem Setzwerkzeug für eine Drehung des Einlageelements 20 um seine Längsachse 99 auf. Im dargestellten Ausführungsbeispiel ist die Drehkupplung 29 als längliche, von einer Kreisform abweichende Ausnehmung an der Rückseite 27 des Einlageelements 20 ausgeführt, welche beispielhaft in die Durchgangsöffnung 28 übergeht. In einer Abwandlung der Ausführungsform der Figuren 6 bis 9 kann die Drehkupplung 29 auch von der Durchgangsöffnung 28 getrennt sein.

Im rückwärtigen Bereich 22 sind an der Aussenseite des Einlageelements 20 Abführkanäle 25 vorgesehen, welche sich vom Verjüngungsbereich 21 zur Rückseite 27 des Einlageelements 20 hin erstrecken, und welche zum Abführen von abgearbeitetem Substrat dienen.

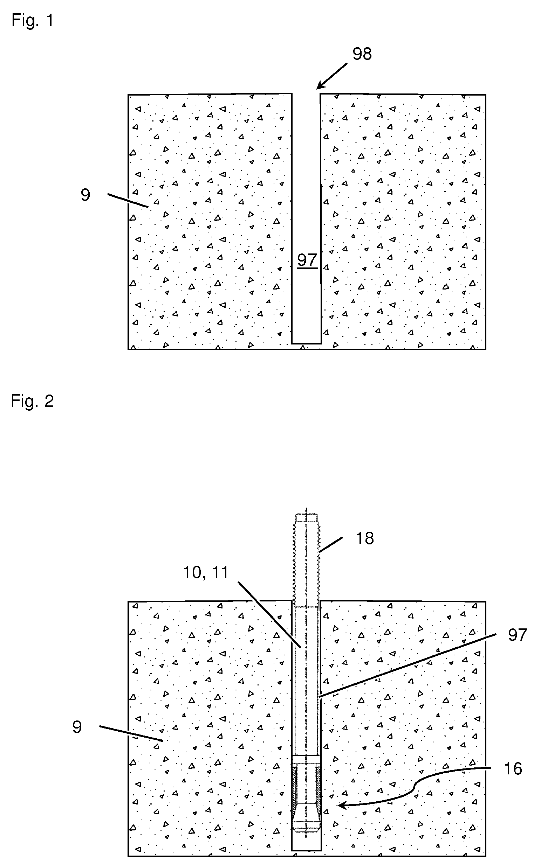

Die Figuren 2 bis 5 zeigen unter anderem einen Anker 10 mit einer Ankerstange 11. Der Anker 10 weist in einem vorderen Bereich einen Verankerungsbereich 16 zum Verankern der Ankerstange 11 in einem Substrat und in einem rückwärtigen Bereich einen Lasteinleitungsbereich 18 zum Einbringen von Zuglasten in die Ankerstange 11 auf. Im dargestellten Ausführungsbeispiel ist der Anker 10 als mechanischer Anker ausgebildet und weist im Verankerungsbereich 16 eine die Ankerstange 11 umgebende Spreizhülse und an der Ankerstange 11 einen Spreizkonus zum Anpressen der Spreizhülse an das umgebende Substrat bei Zug in der Ankerstange 11 auf. Aber auch alternativ ausgeführte mechanische oder auch chemische oder gemischt chemisch-mechanische Verankerungsbereiche 16 sind denkbar. Im dargestellten Ausführungsbeispiel weist die Ankerstange 11 im Lasteinleitungsbereich 18 ein Aussengewinde zum formschlüssigen Einleiten von Zugkräften in die Ankerstange 11 auf. Es sind aber auch alternative Lasteinleitungsbereiche 18 denkbar, beispielsweise Bajonettmechanismen oder Nagelköpfe.

Mit dem Anker 10 der Figuren 2 bis 5 zusammen kann das Einlageelement 20 der Figuren 6 bis 9 ein Ankerset bilden.

Aufeinanderfolgende Stadien bei einem Verfahren zum Setzen dieses Ankersets in einem mineralischen Substrat 9, so dass eine Befestigungsanordnung erhalten wird, sind in den Figuren 1 bis 5 gezeigt.

Wie Figur 1 zeigt, wird bei diesem Setzverfahren, vorzugsweise durch Bohren, zunächst ein Loch 97, insbesondere ein Sackloch, im mineralischen Substrat 9 bereitgestellt. Am Übergang zur Oberfläche 91 des mineralischen Substrats 9 weist das Loch 97 eine Mündung 98 auf.

Anschliessend wird, wie in Figur 2 gezeigt, der Anker 10 mit seinem Verankerungsbereich 16 voran von der Mündung 98 her in das Loch 97 eingeführt. Vorzugsweise kann der Anker 10 sogleich im Loch 97 vorverankert werden, beispielsweise durch geringfügiges Zurückziehen der Ankerstange 11 aus dem Loch 97 heraus.

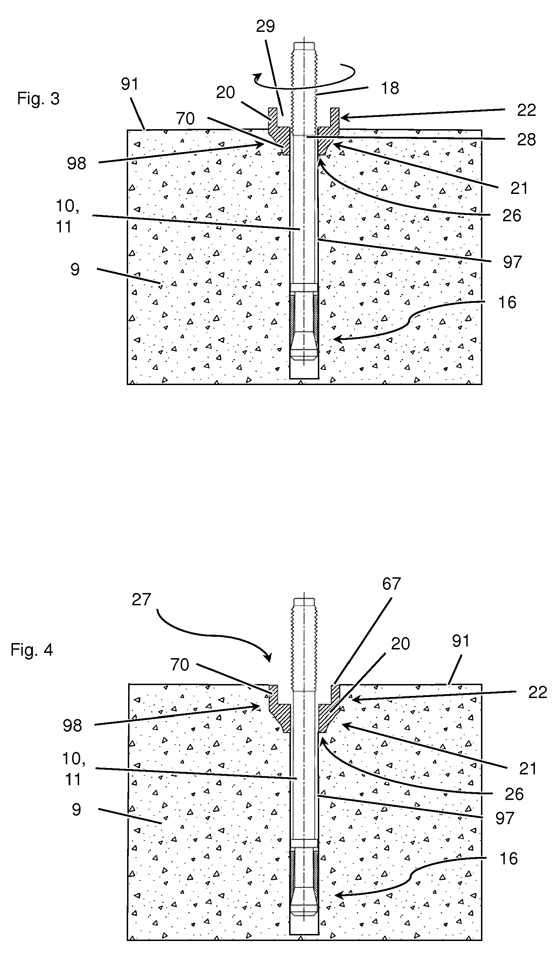

Anschliessend wird, wie in Figur 3 gezeigt, das Einlageelement 20 mit seiner Durchgangsöffnung 28 auf die Ankerstange 11 aufgesteckt, wobei die Ankerstange 11 in die Durchgangsöffnung 28 gelangt. Wie in Figur 3 mit einem Pfeil angedeutet ist, wird das Einlageelement 20 in Drehung um seine Längsachse 99 versetzt und gleichzeitig an die das Loch 97 umgebende Oberfläche 91 des mineralischen Substrats 9 angepresst. Dies kann insbesondere durch ein nicht dargestelltes Setzwerkzeug erfolgen, welches mittels der Drehkupplung 29 drehfest mit dem Einlageelement 20 verbunden wird. Durch das Anpressen und die Drehung des Einlageelements 20 arbeitet das Einlageelement 20 an der Mündung 98 des Lochs 97 um das Loch 97 herum mineralisches Substrat 9 ab und dringt, unter Bildung einer mündungsseitigen Aufweitung 70 des Lochs 97, in das mineralische Substrat 9 ein. Das Abarbeiten des mineralischen Substrats 9 kann vorzugsweise an den gegebenenfalls vorhandenen Schneiden 30 beziehungsweise 31 erfolgen. Das vom Einlageelement 20 abgearbeitete mineralische Substrat 9 kann insbesondere durch die gegebenenfalls vorhandenen Abführkanäle 25 hindurch nach aussen abgeführt werden.

Wie Figur 4 zeigt, wird das Einlageelement 20 so weit in das mineralische Substrat 9 eingetrieben, bis die rückwärtige Stirnseite 67 auf der Rückseite 27 des Einlageelements 20 etwa bündig mit der das Loch 97 umgebenden Oberfläche 91 des mineralischen Substrats 9 ist. Das Setzwerkzeug wird dann entfernt.

Wie Figur 5 zeigt, wird anschliessend ein zu verankerndes Anbauteil 7 auf die Ankerstange 11 des Ankers 10 aufgesteckt und das Anbauteil 7, beispielsweise durch eine auf den Lasteinleitungsbereich 18 aufgeschraubte Mutter 8, an der Ankerstange 11 gesichert. Wenn bei der derart erhaltenen Befestigungsanordnung Querlasten im Anbauteil 7 auftreten, welche die Ankerstange 11 zur Seite hin verbiegen, sorgt das Einlageelement 20 dafür, dass die Ankerstange 11 im Bereich der Mündung 98 des Lochs 97 nicht in unmittelbaren Kontakt mit dem mineralischen Substrat 9 gelangt. Die auf die Ankerstange 11 wirkenden Querkräfte werden also zunächst auf das Einlageelement 20 übertragen, das heisst im Bereich der Mündung 98 des Lochs 97 erfolgt die Querkraftübertragung zwischen Ankerstange 11 und mineralischem Substrat 9 mittelbar über das Einlageelement 20 hinweg. Das Einlageelement 20 lenkt die Spannungsspitzen ab und leitet die Kraft über eine größere Oberfläche in das umgebende mineralische Substrat 9, welches insbesondere ein Betonsubstrat sein kann, ein. Dadurch wird der Druck reduziert so dass die Betonfestigkeit erst bei deutlich gesteigerten Lasten überschritten wird.

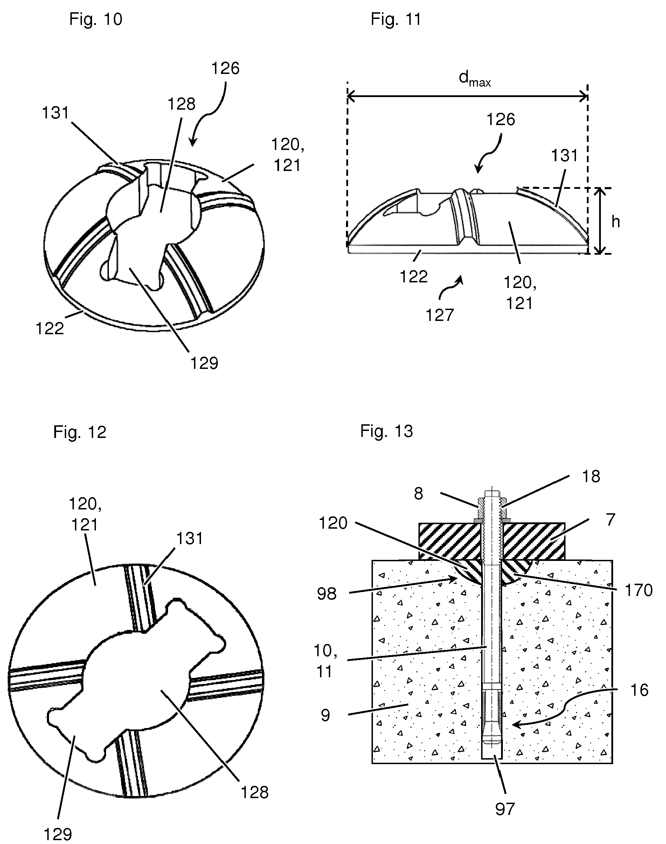

Die Figuren 10 bis 12 zeigen eine zweite Ausführungsform eines Einlageelements 120. Ebenso wie beim Einlageelement 20 der Figuren 6 bis 9 ist auch beim Einlageelement 120 der Figuren 10 bis 12 der maximale Aussendurchmesser dₘₐₓ des Einlageelements 120 grösser als dessen Höhe h, und ebenso wie beim Einlageelement 20 der Figuren 6 bis 9 weist auch das Einlageelement 120 der Figuren 10 bis 12 eine Rückseite 127, eine Vorderseite 126, eine Durchgangsöffnung 128, welche von der Rückseite 127 zur Vorderseite 126 reicht, einen rückwärtigen Bereich 122 mit etwa kreiszylindrischer Aussenoberfläche, einen an den rückwärtigen Bereich 122 anschliessenden Verjüngungsbereich 121, in dem der Aussendurchmesser des Einlageelements 120 nach vorne hin abnimmt, sowie eine durch eine von einer Kreisform abweichenden länglichen Vertiefung gebildete Drehkupplung 129 auf. Im Hinblick auf diese Elemente kann daher zur Vermeidung von Wiederholungen auf die Beschreibung der Ausführungsform der Figur 6 bis 9 verwiesen werden.

Die Ausführungsform der Figuren 10 bis 12 unterscheidet sich von der Ausführungsform der Figuren 6 bis 9 insbesondere durch die Ausgestaltung des Verjüngungsbereichs 121. So ist gemäss der Ausführungsform der Figuren 10 bis 12 der Verjüngungsbereich 121 nämlich im Unterschied zur Ausführungsform der Figuren 6 bis 9 nicht konkavkegelig, sondern konvexkegelig ausgeführt, das heisst das Einlageelement 120 der Ausführungsform der Figuren 10 bis 12 ist in seinem Verjüngungsbereich 121 in Seitenansicht (vergleiche Figur 11) aussenseitig nach aussen vorgewölbt. Der konvexkegelige Verjüngungsbereich 121 ist mit Schneiden 131 versehen und reicht unmittelbar an die Durchgangsöffnung 128 heran.

Auch das Einlageelement 20 der Figuren 10 bis 12 kann mit dem Anker 10 der Figuren 2 bis 5 zusammen ein Ankerset bilden. Dieses Ankerset kann in Analogie zu den Figuren 1 bis 5 gesetzt werden, so dass insofern, zur Vermeidung von Wiederholungen, auf die obenstehende Erläuterung der Figur 1 bis 5 verwiesen werden kann. Eine in diesem Setzverfahren erhaltene Befestigungsanordnung, bei der das Einlageelement 120 in einer Aufweitung 170 im mineralischen Substrat 9 angeordnet ist, ist in Figur 13 gezeigt.

## Patentansprüche

1. Ankerset aufweisend einen Anker (10) mit einer Ankerstange (11) sowie ein Einlageelement (20; 120) zum zumindest teilweisen Einsenken in ein die Ankerstange (11) umgebendes mineralisches Substrat (9) zum Armieren einer Mündung (98) eines im mineralischen Substrat (9) angeordneten Lochs (97),
wobei das Einlageelement (20; 120) eine Vorderseite (26; 126), eine Rückseite (27; 127) und eine Durchgangsöffnung (28; 128) für die Ankerstange (11) aufweist,
**dadurch gekennzeichnet,**
**dass** der maximale Aussendurchmesser (dₘₐₓ) des Einlageelements (20; 120) grösser ist als seine Höhe (h).

2. Ankerset nach Anspruch 1,
**dadurch gekennzeichnet,**
**dass** das Einlageelement (20; 120) einen Verjüngungsbereich (21; 121) aufweist, in dem der Aussendurchmesser (d) des Einlageelements (20; 120) zur Vorderseite (26; 126) des Einlageelements (20; 120) hin abnimmt.

3. Ankerset nach Anspruch 2,
**dadurch gekennzeichnet,**
**dass** das Einlageelement (20; 120) im Verjüngungsbereich (21; 121) eine im Längsschnitt des Einlageelements (20; 120) konkave Aussenoberfläche aufweist.

4. Ankerset nach einem der vorstehenden Ansprüche,
**dadurch gekennzeichnet,**
**dass** das Einlageelement (20; 120) zumindest eine Schneide (30, 31; 131) zum Schneiden des mineralischen Substrats (9) aufweist.

5. Ankerset nach Anspruch 2 und 4,
**dadurch gekennzeichnet,**
**dass** zumindest eine Schneide (31) im Verjüngungsbereich (21) des Einlageelements (20) und zumindest eine weitere Schneide (30) an einer vorderen Stirnseite (66) des Einlageelements (20) angeordnet ist.

6. Ankerset nach einem der vorstehenden Ansprüche,
**dadurch gekennzeichnet,**
**dass** das Einlageelement (20; 120) zumindest eine Drehkupplung (29; 129) zur drehfesten Kopplung des Einlageelements (20; 120) mit einem Setzwerkzeug aufweist.

7. Ankerset nach einem der vorstehenden Ansprüche,
**dadurch gekennzeichnet,**
**dass** das Einlageelement (20; 120) aussenseitig zumindest einen Abführkanal (25) für abgearbeitetes mineralisches Substrat (9) aufweist.

8. Ankerset nach einem der vorstehenden Ansprüche,
**dadurch gekennzeichnet,**
**dass** das Einlageelement (20; 120) zumindest überwiegend aus einem Metallmaterial besteht.

9. Ankerset nach einem der vorstehenden Ansprüche,
**dadurch gekennzeichnet,**
**dass** die Ankerstange (11) durch die Durchgangsöffnung (28; 128) hindurchgeführt ist.

10. Einlageelement (20; 120) eines Ankersets nach einem der vorstehenden Ansprüche.

11. Befestigungsanordnung aufweisend ein Ankerset nach einem der Ansprüche 1 bis 9 und ein mineralisches Substrat (9) mit einem Loch (97) mit einer Mündung (98),
- wobei die Ankerstange (11) im Loch (97) angeordnet und im Loch (97) verankert ist, und
- wobei das Einlageelement (20; 120) zumindest teilweise im mineralischen Substrat (9) eingesenkt ist und das Einlageelement (20; 120) dabei die Ankerstange (11) ringförmig umgibt und die Mündung (98) des Lochs (97) armiert.

12. Setzverfahren für ein Ankerset nach einem der Ansprüche 1 bis 9, bei dem
- in einem mineralischen Substrat (9) ein Loch (97) mit einer Mündung (98) vorgesehen wird,
- an der Mündung (98) des Lochs (97) eine Aufweitung (70; 170) des Lochs (97) vorgesehen wird,
- die Ankerstange (11) in das Loch (97) eingeführt und im Loch (97) verankert wird, und
- die Ankerstange (11) in der Durchgangsöffnung (28; 128) des Einlageelements (20; 120) angeordnet wird und das Einlageelement (20; 120) zumindest bereichsweise in der Aufweitung (70; 170) des Lochs (97) angeordnet wird und dabei die Mündung (98) des Lochs (97) armiert wird.

13. Verfahren nach Anspruch 12,
**dadurch gekennzeichnet,**
**dass** zunächst die Ankerstange (11) im Loch (97) angeordnet wird und anschliessend das Einlageelement (20; 120) in der Aufweitung (70) des Lochs (97) angeordnet wird.

14. Verfahren nach einem der Ansprüche 12 oder 13,
**dadurch gekennzeichnet,**
**dass** zumindest ein Teilbereich der Aufweitung (70) des Lochs (97) durch Eindrehen des auf die Ankerstange (11) aufgesteckten Einlageelements (20; 120) in das Substrat (9) erzeugt wird.
